Europäisches Patentamt

European Patent Office

Office européen des brevets

(19)

(11) Numéro de publication: **0 161 145**
**B1**

(12) **FASCICULE DE BREVET EUROPEEN**

(45) Date de publication du fascicule du brevet:
**11.05.88**

(51) Int. Cl.⁴: **B 60 G 11/44,** B 60 G 9/00

(21) Numéro de dépôt: **85400628.5**

(22) Date de dépôt: **29.03.85**

(54) **Système de suspension pour un train de roues de véhicule à essieu rigide.**

(30) Priorité: **03.04.84 FR 8405245**

(43) Date de publication de la demande:
**13.11.85 Bulletin 85/46**

(45) Mention de la délivrance du brevet:
**11.05.88 Bulletin 88/19**

(84) Etats contractants désignés:
**BE DE GB IT NL SE**

(56) Documents cités:
**DE - B - 1 087 465**
**DE - B - 1 098 376**
**FR - A - 771 388**
**FR - A - 777 432**
**FR - A - 859 003**
**FR - A - 1 074 364**
**FR - A - 1 457 405**
**FR - A - 2 216 132**
**FR - A - 2 529 839**
**US - A - 2 812 936**
**US - A - 2 893 723**

(73) Titulaire: **AEROSPATIALE Société Nationale Industrielle, 37, Boulevard de Montmorency, F-75781 Paris Cédex 16 (FR)**

(72) Inventeur: **Aubry, Jacques, 2, avenue Marie Gasquet, F-13480 Cabries (FR)**
Inventeur: **Merlet, Jean-Paul, Villa Treize Etoiles Legassin, F-13120 Mimet (FR)**
Inventeur: **Bonfils, Michel, Chemin de la Mer, F-13760 St. Cannat (FR)**

(74) Mandataire: **Bonnetat, Christian et al, Cabinet PROPI Conseils 23 rue de Léningrad, F-75008 Paris (FR)**

ACTORUM AG

## Description

La présente invention concerne un système de suspension pour un train de roues arrière pour véhicule à pont arrière rigide, comportant d'une part, un tube de torsion longitudinal articulé à l'une de ses extrémités au châssis du véhicule de façon à pouvoir pivoter autour d'un axe horizontal transversal sans possibilité de tourner autour de son axe longitudinal et solidaire à son axtrémité dudit pont arrière rigide et, d'autre part, deux lames élastiques longitudinales, qui sont disposées latéralement chacune d'un côté dudit tube de torsion et donc chacune d'elles relie une extrémité dudit pont arrière audit châssis.

Une suspension de ce type est décrite dans le brevet français FR-A-771 388. Dans cette suspension connue:

a) les lames élastiques sont en acier;

b) les lames élastiques sont rigidement reliées entre elles, à la moitié de leur longueur, aux extrémités du pont arrière rigide;

c) à leur extrémité avant, les lames élastiques sont articulés autour de pivots solidaires du châssis.

Il résulte des points b) et c) ci-dessus que l'action de suspension procurée par le dispositif du document FR-A-771 388 est particulièrement faible, puisque tout se passe comme si on n'utilisait que des lames de ressort de longueur moitié et de raideur double, disposées entre les pivots fixes et l'essieu rigide.

La présente invention a notamment pour objet de remédier à ces inconvenients.

A cette fin, selon l'invention, le système de suspension du type décrit ci-dessus est caractérisé en ce que lesdites lames élastiques sont réalisées en fibres à haute résistance enrobées de résine synthetique, et en ce que chacune desdites lames élastiques est fixée à son extrémité arrière audit pont arrière, est articulée dans sa partie intermédiaire audit châssis autour d'un axe transversal et est en appui à son extrémité avant ledit châssis.

Ainsi, on obtient une suspension efficace, puisque le présente invention prévoit d'articuler les lames élastiques, dans leur partie intermédiaire, autour de paliers. Puisque, de plus, les extrémités avant desdites lames élastiques sont librement reliées au châssis, la totalité de la longueur des lames est utilisée pour assurer la suspension, qui peut être bonne.

On remarquera que, dans la suspension du document FR-A-771 388, il ne serait pas passible d'articuler les lames élastiques autour d'un axe transversal; en effet, le rapport E/R de l'acier n'est pas suffisamment élevé pour supporter les contraintes auxquelles sont soumises les lames de ressort de la suspension de l'invention.

Grâce à la combinaison de particularités de l'invention, on améliore considérablement la suspension du document FR-A-771 388. En réalité, cette suspension antérieure a été complètement redessinée pour tirer avantage des propriétés des nouveaux matériaux composites fibres-résine.

De préférence, ledit tube de torsion est réalisé en fibres à haute résistance enrobées de résine synthétique.

Le fait de réaliser lesdits tube et lames en matière composite fibres-résine synthétique permet d'obtenir pour ces éléments des caractéristiques mécaniques correspondant aux fontions qu'il remplissent et qu'il serait impossible d'obtenir avec des éléments en acier, à dimensionnement et poids comparables. Grâce à la présente invention, on peut donc réaliser une suspension qui, tout en étant simple, est légère, de sorte qu'elle permet d'obtenir un gain sur le poids total du véhicule, et donc sur sa consommation en carburant.

Avantageusement, ledit tube de torsion présente des dimensions intérieures suffisantes pour pouvoir être traversé longitudinalement par l'arbre de transmission de puissance. Il est également avantageux que ledit tube de torsion soit disposé de façon que son axe longitudinal se trouve dans le plan longitudinal médian du véhicule et que lesdites lames élastiques soient identiques et disposées symétriquement par rapport audit tube.

Les figures du dessin annexé feront bien comprendre comment l'invention peut être réalisée. Sur ces figures, des références identiques désignent des éléments semblables.

La figure 1 est une vue schématique de dessus du système de suspension conforme à l'invention.

La figure 2 est une coupe selon la ligne II-II de la figure 1.

La figure 3 illustre, en vue de dessus partielle, un mode de réalisation pratique du système de suspension selon l'invention monté sur un tracteur routier.

La figure 4 est une vue latérale correspondant à la figure 3.

La figure 5 est, dans sa partie gauche, une demi-vue arrière partielle du tracteur routier des figures 3 et 4 et, dans sa partie droite, une demi-coupe selon la ligne V-V de la figure 4.

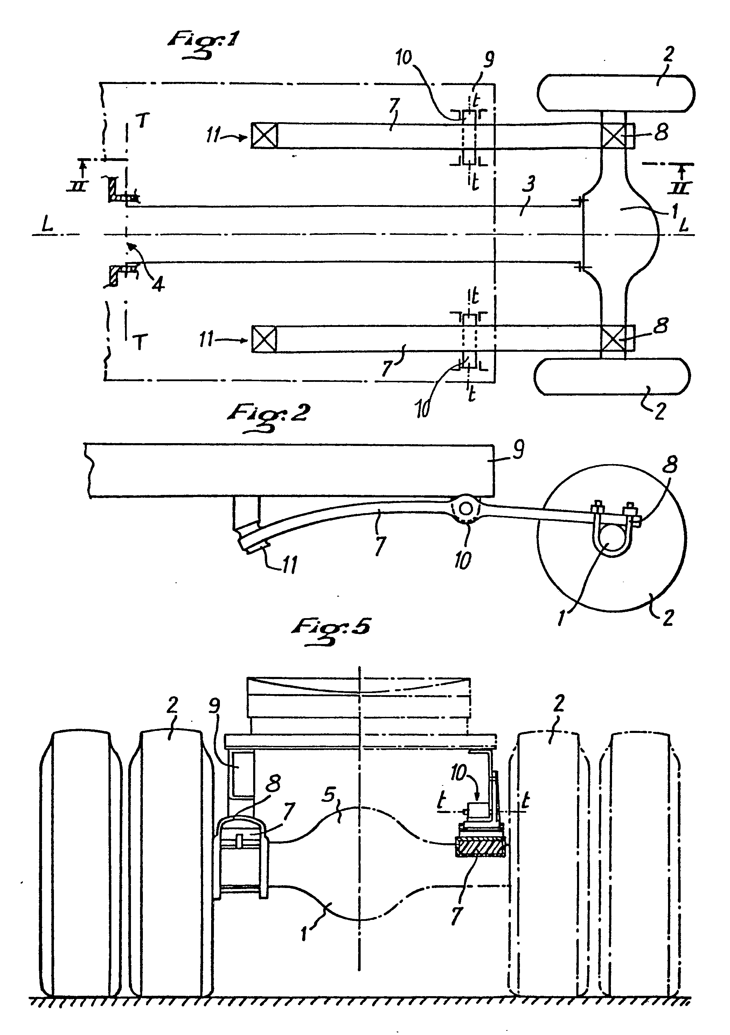

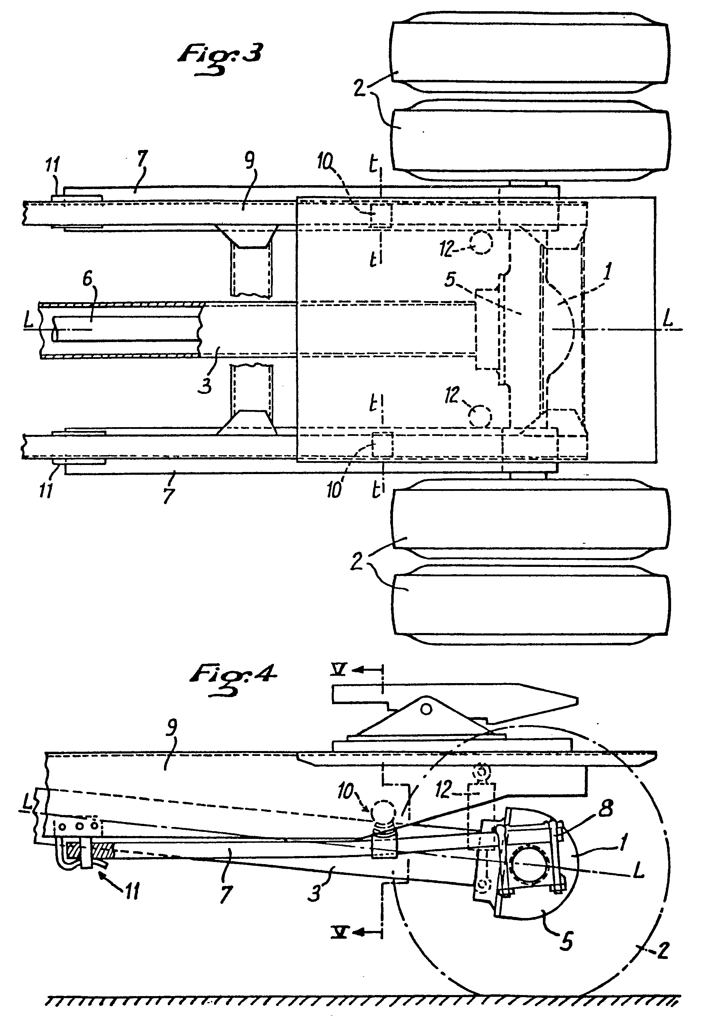

Le système de suspension selon l'invention, montré par ces figures, est appliqué au train de roues arrière d'un tracteur routier, constitué d'un pont arrière 1 portant des roues 2 à ses extrémités. Ce système de suspension comporte un tube de torsion longitudinal 3, dont l'axe L-L se trouve dans le plan longitudinal médian du véhicule. A son extrémité avant, le tube 3 est solidaire d'une articulation 4, lui permettant de pivoter, sans possibilité de tourner autour dudit axe longitudinal L-L, autour d'un axe T-T du châssis 9 de véhicule, cet axe T-T étant horizontal et transversal audit plan longitudinal médian du véhicule. A son extrémité arrière, le tube de torsion 3 est solidaire de la trompette 5 du pont arrière 1. L'arbre de transmission de puissance 6 passe longitudinalement à travers le tube de torsion 3.

Le système de suspension selon l'invention comporte de plus deux lames élastiques longitudinales 7, disposées latéralement, de parte et d'autre du tube de torsion 3. Ces lames 7 sont identiques et disposées symmetriquement par rapport audit tube.

Chaque lame élastique 7:

— est fixée à son extrémité arrière à une extrémité latérale du pont arrière, par l'intermédiaire d'un dispositif de fixation 8;

— est articulée dans sa partie intermédiaire audit châssis 9 autour d'un axe transversal t-t, par l'intermédiaire d'une articulation 10, les axes t-t des deux articulations 10 étant alignés;

— et est en appui par son extrémité avant contre le châssis 9, par l'intermédiaire de dispositifs d'appui 11.

Des amortisseurs 12 complètent le système de suspension.

On voit ainsi que, dans le système de suspension qui vient d'être décrit:

— la fonction antidevers (ou antiroulis) est assurée par le tube 3 travaillant en torsion autour de son axe longitudinal L-L;

— la fonction de transmission des efforts longitudinaux est assurée par le tube 3 travaillant en compression, parallèlement à son axe longitudinal L-L;

— les fonctions de suspension verticale et de guidage latéral sont assurées par les lames élastiques 7.

De préférence, le tube de torsion 3 et les lames 7 sont constitués par des éléments réalisés en une matière composite constituée de fibres (de verre, de carbone, de bore etc.... ou d'un mélange de ces matières) enrobées d'une résine synthétique, par la mise en oeuvre de tout procédé connu (bobinage filamentaire, superposition de tresses, tissage, etc....) permettant d'obtenir pour lesdits tubes des valeurs élevées du rapport E/R, dans lequel R est la contrainte à la rupture et E le module d'élasticité.

## Revendications

1. Système de suspension pour un train de roues arrière pour véhicule à pont arrière rigide, comportant d'une part, un tube de torsion (3) longitudinal articulé à l'une de ses extrémités au châssis du véhicule (9) de façon à pouvoir pivoter autour d'un axe horizontal (T-T) transversal sans possibilité de tourner autour de son axe longitudinal (L-L) et solidaire à son autre extrémité dudit pont arrière rigide (1) et, d'autre part, deux lames élastiques longitudinales (7), qui sont disposées latéralement chacune d'un côté dudit tube de torsion (3) et dont chacune d'elles relie une extrémité dudit pont arrière audit châssis, caractérisé en ce que lesdites lames élastiques (7) sont réalisées en fibres à haute résistance enrobées de résine synthétique, et en ce que chacune desdites lames élastiques (7) est fixée à son extrémité arrière audit pont arrière (1), est articulée dans sa partie intermédiaire audit châssis (9) autour d'un axe transversal (t-t) et est en appui à son extrémité avant (en 11) contre ledit châssis (9).

2. Système de suspension selon la revendication 1, caractérisé en ce que ledit tube de torsion (3) est réalisé en fibres à haute résistance enrobées de résine synthétique.

3. Système de suspension selon l'une des revendications 1 ou 2, caractérisé en ce que ledit tube de torsion (3) présente des dimensions intérieures suffisantes pour pouvoir être traversé longitudinalement par l'arbre de transmission de puissance (6).

4. Système de suspension selon l'une des revendications 1 à 3, caractérisé en ce que ledit tube de torsion (3) est disposé de façon que son axe longitudinal (L-L) se trouve dans le plan longitudinal médian du véhicule et en ce que lesdites lames élastiques (7) sont identiques et disposées symétriquement par rapport audit tube.

## Patentansprüche

1. Aufhängungssystem für das Hinterradfahrwerk für ein Fahrzeug mit starrer Hinterachsbrücke mit einerseits einem Torsions-Längsrohr (3), das an einem seiner Enden am Chassis des Fahrzeugs (9) derart angelenkt ist, dass es um eine horizontale Querachse (T-T) schwenken kann, ohne dass es um seine Längsachse (L-L) drehen kann, und das an seinem anderen Ende fest mit der starren Hinterachsbrücke (1) verbunden ist, und mit andererseits zwei elastischen Längsarmen (7), die jeweils seitlich auf beiden Seiten des Torsionsrohrs (3) angeordnet sind und die jeweils ein Ende der Hinterachsbrücke (1) mit dem Chassis verbinden, dadurch gekennzeichnet, dass die elastischen Arme (7) aus mit synthetischem Harz umhüllten Fibern von hoher Festigkeit bestehen, und dass jeder der elastischen Arme (7) mit seinem hinteren Ende an der Hinterachsbrücke (1) befestigt ist, in seinem mittleren Teil am Chassis (9) um eine Querachse (t-t) schwenkbar ist und an seinem vorderen Ende (bei 11) gegen das Chassis abgestützt ist.

2. Aufhängungssystem nach Anspruch 1, dadurch gekennzeichnet, dass das Torsionsrohr (3) aus mit synthetischem Harz umhüllten Fibern von hoher Festigkeit besteht.

3. Aufhängungssystem nach einem der Ansprüche 1 oder 2, dadurch gekennzeichnet, dass das Torsionsrohr (3) genügend grosse Innenabmessungen aufweist, um den Längsdurchgang der Antriebswelle (6) zu erlauben.

4. Aufhängungssystem nach einem der Ansprüche 1 bis 3, dadurch gekennzeichnet, dass das Torsionsrohr (3) derart angeordnet ist, dass seine Längsachse (L-L) sich in der longitudinalen Mittelebene des Fahrzeugs befindet, und dass die elastischen Arme (7) identisch aufgebaut und symmetrisch zum Rohr (3) angeordnet sind.

## Claims

1. Suspension systen for a set of rear vehicle wheels with rigid rear axle, comprising, on the one hand, a longitudinal torsion tube (3) articulated at one of its ends on the chassis of the vehicle (9) so as to be able to pivot about a transverse horizontal axis (T-T) without possibility of rotating about its longitudinal axis (L-L) and fast at its other end with said rigid rear axle (1) and, on the other hand, two longitudinal elastic blades (7) which are disposed laterally each on one side of said torsion tube (3) and of which each connects one end of said rear axle to said chassis, characterized in that said elastic blades (7) are made of high-resistance fibers coated with synthetic resin and in that each of said elastic blades (7) is fixed at its rear end to said rear axle (1), is articulated in its intermediate part on said chassis (9) about a transverse axis (t-t) and is in abutment at its front end (at 11) against said chassis (9).

2. Suspension system according to claim 1, characterized in that said torsion tube (3) is made of high-resistance fibers coated with synthetic resin.

3. Suspension system according to claim 1 or 2, characterised in that said torsion tube (3) presents internal dimensions sufficient to be able to be traversed longitudinally by the power transmission shaft (6).

4. Suspension system according to one of claims 1 to 3, characterized in that said torsion tube (3) is disposed so that its longitudinal axis (L-L) lies in the median longitudinal plane of the vehicle and in that said elastic blades (7) are identical and disposed symmetrically with respect to said tube.

0 161 145

Fig.1

Fig.2

Fig.5

5

*Fig.3*

*Fig.4*